# EUROPÄISCHE PATENTSCHRIFT

(11) **EP 0 718 240 B1**
(45) Veröffentlichungstag und Bekanntmachung des Hinweises auf die Patenterteilung: **28.05.2003**
(21) Anmeldenummer: 95118850.7
(22) Anmeldetag: 30.11.1995
(51) Int. Cl.: C02F 3/10, B01J 19/32

(54) **Füllkörper und Verfahren zur Herstellung desselben**
Filler body and method of production
Elément de garnissage et méthode pour sa fabrication

(30) Priorität: 19.12.1994 DE 9420207 U
(43) Veröffentlichungstag der Anmeldung: 26.06.1996
(73) Patentinhaber: Norddeutsche Seekabelwerke GmbH & Co. KG, 26954 Nordenham (DE)
(72) Erfinder: Kruse, Hans-Dieter, D-26160 Bad Zwischenahn (DE)
(74) Vertreter: Möller, Friedrich, Dipl.-Ing.

(56) Entgegenhaltungen:
- EP-A- 0 010 045
- DE-A- 3 522 241
- DE-A- 4 320 469
- US-A- 3 329 271
- US-A- 5 388 316

## Beschreibung

Die Erfindung betrifft einen Füllkörper, insbesondere zur biologischen Abwasser-Reinigung, gemäß dem Oberbegriff des Anspruchs 1. Femer betrifft die Erfindung ein Verfahren zur Herstellung des Füllkörpers gemäß dem Oberbegriff des Anspruchs 18.

Füllkörper der hier angesprochenen Art finden hauptsächlich dort Anwendung, wo es um die Verbesserung des Stoffaustausches zwischen Gasen und/oder Flüssigkeiten geht. Besonders bewährt haben sich derartige Füllkörper im Bereich der biologischen Abwasser-Reinigung, wo sie als Tropfkörper oder getauchtes Festbett zum Einsatz kommen. Hierbei dient der Füllkörper als Träger für die zur biologischen Behandlung erforderlichen Bakterien. nämlich eines sogenannten biologischen Rasens. Die Leistungsfähigkeit einer mit derartigen Füllkörpern bestückten Anlage zur beispielsweise Abwasser-Reinigung hängt von mehreren Faktoren ab. Einerseits soll der Füllkörper eine möglichst große spezifische Bewuchsfläche bieten, andererseits ist ein möglichst guter Halt der Bakterien auf dem Füllkörper erforderlich. Schließlich soll der Füllkörper von der zu behandelnden Flüssigkeit möglichst ungehindert durchströmbar bzw. umströmbar sein. Hierzu ist eine exakte vertikale und horizontale Ausrichtung der einzelnen Füllkörperblöcke des Füllkörpers erforderlich.

Die US-A-3 329 271 zeigt einen Füllkörper für die Abwasser-Reinigung, dessen Füllkörperblöcke mit Hilfe eines Adapters lösbar verbunden sind. Der Adapter dient gleichzeitig der exakten Ausrichtung der einzelnen Füllkörperblöcke. Der bekannte Adapter verfügt über eine durchgehend geschlossene Mantelfläche. Darüber hinaus weist dieser Adapter einen Innendurchmesser auf, der kleiner ist als der Innendurchmesser der einzelnen Rohre der Füllkörperblöcke. Zur Verbindung und exakten Ausrichtung zweier Füllkörperblöcke wird mindestens ein Adapter mit an den Endbereichen dem Innendurchmesser der Rohre entsprechendem Außendurchmesser in benachbarte Enden zweier Rohre unterschiedlicher Füllkörperblöcke gesteckt. Dies hat den Nachteil, dass die Querschnitte der jeweiligen Rohre verengt werden und damit die zu behandelnde Flüssigkeit nicht mehr ungehindert die Füllkörper durchströmen bzw. umströmen kann. Der Adapter verringert deshalb die Wirksamkeit eines derartigen Füllkörpers.

Ausgehend von diesem Stand der Technik liegt der vorliegenden Erfindung das Problem zugrunde, einen wirksamen Füllkörper zu schaffen.

Zur Lösung dieses Problems weist der erfindungsgemäße Füllköper die Merkmale des Anspruchs 1 auf. Dies hat den Vorteil, dass mit Hilfe der vorzugsweise losen Rohre (die gegebenenfalls aber auch nachträglich mit anderen Rohren der Füllkörperblöcke verbunden sein können) eine exakte Ausrichtung der Füllkörperblöcke möglich ist, indem diese Rohre sich über mehrere Füllkörperblöcke erstrecken. Der Innendurchmesser der Rohre wird nicht durch einen Adapter verengt. Somit kann die zu behandelnde Flüssigkeit den biologischen Rasen ungehindert durchströmen bzw. umströmen. Eine mit einem derartigen Füllkörper ausgestattete Anlage zur biologischen Abwasser-Reinigung weist dadurch eine hohe Wirksamkeit auf.

Die Rohre und losen Rohre weisen gleiche Querschnitte auf. Dies hat den Vorteil, dass keine neuen oder zusätzlichen Bauteile hergestellt werden müssen. Ein derartiger Füllkörper lässt sich mit hoher Wirtschaftlichkeit fertigen.

Das erfindungsgemäße Verfahren zur Herstellung des Füllkörpers ist durch die Merkmale des Anspruchs 18 gekennzeichnet. Die Füllkörperblöcke werden zunächst in der üblichen Weise vollständig hergestellt. Anschließend werden an den entsprechenden Stellen die losen Rohre aus dem Füllkörperblock gelöst und entnommen. Hierdurch werden in lediglich zwei Arbeitsschritten sowohl der Füllkörperblock mit den Ausnehmungen, als auch die entsprechenden losen Rohre hergestellt, wobei die Ausnehmungen automatisch auf den Querschnitt der losen Rohre abgestimmt sind.

Bevorzugte Weiterbildungen der Erfindung ergeben sich aus den Unteransprüchen und der Beschreibung. Nachfolgend werden Ausführungsbeispiele der Erfindung anhand der Zeichnung näher erläutert. In der Zeichnung zeigen:
- Fig. 1: einen Füllkörper nach einem ersten Ausführungsbeispiel der Erfindung in schematisiertem Querschnitt,
- Fig. 2: ein Füllkörperblock in Draufsicht,
- Fig. 3: einen zweiten Füllkörperblock in einer Ansicht analog zu Fig. 2,
- Fig. 4: einen weiteren Füllkörperblock in einer Ansicht analog zu Fig. 2 und 3,
- Fig. 5: einen Füllkörper nach einem zweiten Ausführungsbeispiel der Erfindung in einer Ansicht analog zu Fig. 1,
- Fig. 6: einen Füllkörperblock analog Fig. 3 in abgewandelter Form in Draufsicht,
- Fig. 7: einen Füllkörperblock analog Fig. 2 in abgewandelter Form in Draufsicht,
- Fig. 8: einen Füllkörper nach einem dritten Ausführungsbeispiel in schematischer Seitenansicht,
- Fig. 9: eine Detailansicht des Füllkörpers gemäß Fig. 8,
- Fig. 10: einen Füllkörper nach einem weiteren Ausführungsbeispiel der Erfindung in schematischer Draufsicht,
- Fig. 11: eine Auflagerung für die erfindungsgemäßen Füllkörper in schematischer Seitenansicht,

Bei den hier gezeigten Füllkörpern handelt es sich um Tropfkörper und um getauchtes Festbett, wie sie zur biologischen Behandlung von Flüssigkeiten Verwendung finden. Derartige Füllkörper werden hierzu in einen Tropfkörper eingesetzt und mit der zu behandelnden Flüssigkeit berieselt oder in ein mit der zu behandelnden Flüssigkeit gefülltes Becken eingetaucht.

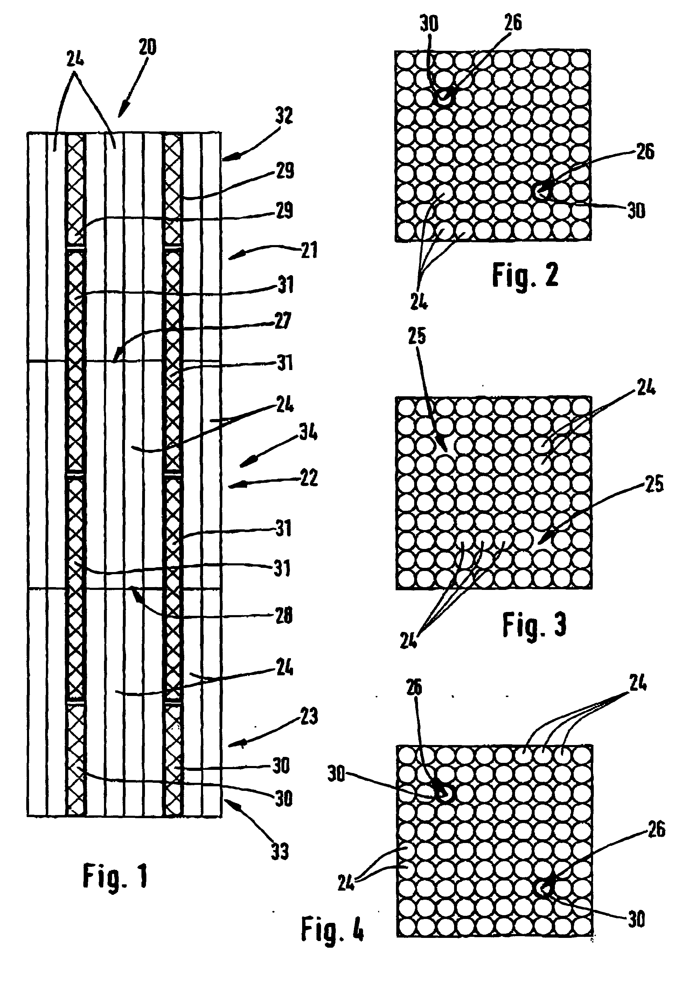

Ein Füllkörper besteht aus mehreren nebeneinander und/oder übereinander angeordneten Füllkörperblöcken. Die übereinander angeordneten Füllkörperblöcke sind lösbar miteinander verbunden. Der Füllkörper 20 gemäß Fig. 1 besteht aus mehreren vertikal übereinander angeordneten Füllkörperblöcken 21, 22, 23. Die Füllkörperblöcke 21, 22, 23 bestehen aus mehreren miteinander verbundenen Rohren 24. Die Rohre 24 der Füllkörperblöcke 21, 22, 23 weisen eine netzartig strukturierte Mantelfläche auf. Des weiteren sind die Rohre 24 z.B. durch Verschweißen fest miteinander verbunden.

Die Füllkörperblöcke 21, 22, 23 weisen Ausnehmungen 25, 26 auf. In den hier gezeigten Ausführungsbeispielen weist jeder Füllkörperblock 21, 22, 23 zwei Ausnehmungen 25, 26 auf.

Je nach Ausgestaltung der Ausnehmungen 25, 26 sind zwei Typen von Füllkörperblöcken 21, 22, 23 zu unterscheiden. Bei einem ersten Typ von Füllkörperblöcken 22 erstrecken sich die Ausnehmungen 25 des Füllkörperblocks 22 über dessen gesamte Höhe. Dadurch entstehen den gesamten Füllkörperblock 22 durchdringende Kanäle. Beim zweiten Typ von Füllkörperblöcken 21, 23 erstrecken sich die Ausnehmungen 26 der Füllkörperblöcke 21, 23 lediglich über einen Teil der Höhe derselben. Die Ausnehmungen 26 sind hierbei derart den Füllkörperblöcken 21, 23 zugeordnet, daß sie von einer Seitenfläche 27, 28 des Füllkörperblocks 21, 23 beginnend sich in das Innere des Füllkörperblocks 21, 23 hinein erstrecken. Die Ausnehmungen 26 erstrecken sich dabei etwa über die Hälfte der Höhe der Füllkörperblöcke 21, 23. Begrenzt werden die Ausnehmungen 26 von Rohren 29, 30, die entsprechend den Rohren 24 ausgebildet sind, jedoch eine geringere Längenabmessung aufweisen. Die Rohre 29, 30 sind mit den Rohren 24 der Füllkörperblöcke 21, 23 durch Verschweißen fest verbunden.

Zur exakten vertikalen und horizontalen Ausrichtung der Füllkörperblöcke 21, 22, 23 erstrecken sich lose Rohre 31 über mehrere Füllkörperblöcke 21, 22 und 22, 23. Die losen Rohre 31 entsprechen exakt den Rohren 24 der Füllkörperblöcke 21, 22, 23, und zwar hinsichtlich ihrer Gestaltung und ihrer Abmessungen. Die losen Rohre 31 ragen in die entsprechend dimensionierten Abmessungen 25, 26 der Füllkörperblöcke 21, 22, 23 hinein und sorgen für eine lösbare Verbindung der Füllkörperblöcke 21, 22, 23. Ein ungewolltes horizontales Verschieben der Füllkörperblöcke 21, 22, 23 wird durch die losen Rohre 31 vermieden und somit wird die exakte Ausrichtung der Füllkörperblöcke 21, 22, 23 gewährleistet. Die losen Rohre 31 können nach dem Verbinden der Füllkörperblöcke 21, 22, 23 mit bestimmten Rohren 24 verbunden sein.

Die Füllkörperblöcke 21, 23 mit den sich lediglich über einen Teil der Höhe der Füllkörperblöcke 21, 23 erstreckenden Ausnehmungen 26 sind seitlichen Enden 32, 33 des Füllkörpers zugeordnet. Füllkörperblöcke 22 mit durchgehenden Ausnehmungen 25 sind dementsprechend einem Mittelbereich 34 des Füllkörpers 20 zugeordnet. Hierbei sind die Füllkörperblöcke 21, 23 derart angeordnet, daß die Ausnehmungen 26 der Füllkörperblöcke 21, 23 die Ausnehmungen 25 des Füllkörperblocks 22 fortsetzen (Fig. 1). Demzufolge schließen die Rohre 29, 30 die Ausnehmungen 26 zu den Enden 32, 33 des Füllkörpers 20 hin ab. Es ist selbstverständlich, daß in Abweichung zu dem in Fig. 1 gezeigten Ausführungsbeispiel zwischen den seitlichen Füllkörperblöcken 21, 23 eine beliebige Anzahl von Füllkörperblöcken 22 mit durchgehenden Ausnehmungen 25 angeordnet sein kann.

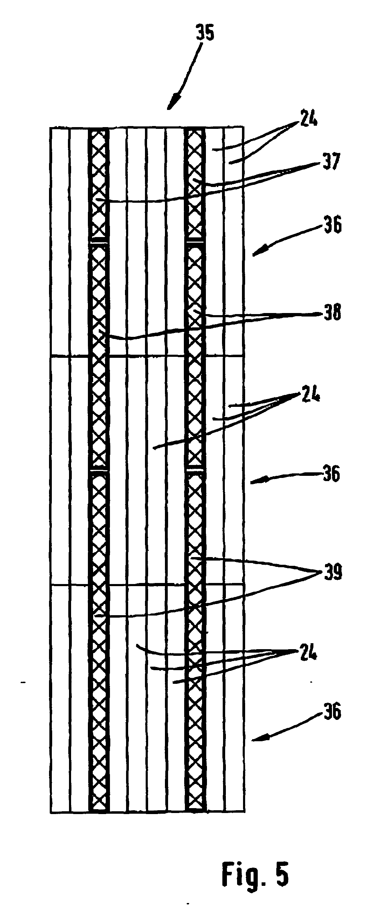

Eine zweite erfindungsgemäße Ausgestaltung eines Füllkörpers 35 zeigt Fig. 5. Der Füllkörper 35 besteht aus drei identischen Füllkörperblöcken 36, die analog zu dem Füllkörperblock 22 gemäß Fig. 3 ausgebildet sind. Die Füllkörperblöcke 36 verfügen demnach über durchgehende Ausnehmungen 25, die sich über die gesamte Höhe der Füllkörperblöcke 36 erstrecken. Da Füllkörperblock 36 und Füllkörperblock 22 gleichartig ausgebildet sind, werden für gleiche Bauteile gleiche Bezugsziffern verwendet.

Die Ausnehmungen 25 der Füllkörperblöcke 36 nehmen zur exakten Ausrichtung der Füllkörperblöcke 36 lose Rohre 37, 38, 39 auf. Die losen Rohre 37, 38, 39 entsprechen bis auf die Längenabmessungen exakt den Rohren 24 der Füllkörperblöcke 36. Die Längenabmessungen der losen Rohre 37, 38, 39 entsprechen in etwa dem 1/2-, 2/2-, 3/2-fachen der Höhe der Füllkörperblöcke 36 bzw. der Längenabmessung der Rohre 24. Es ist jedoch auch denkbar, lose Rohre zu verwenden, die lediglich in etwa das 1/2-, 2/2-fache der Längenabmessung der Rohre 24 aufweisen. Gemäß Fig. 5 erstreckt sich ein Teil der losen Rohre 38, 39 über mehrere Füllkörperblöcke 36. Die losen Rohre 37 schließen lediglich die Ausnehmungen 25 des obersten Füllkörperblocks 36 nach oben hin ab. Auch mit diesem erfindungsgemäß ausgestalteten Füllkörper 35 wird ein ungewolltes horizontales Verschieben der Füllkörperblöcke 36 vermieden. Die Füllkörperblöcke 36 bleiben stets exakt ausgerichtet.

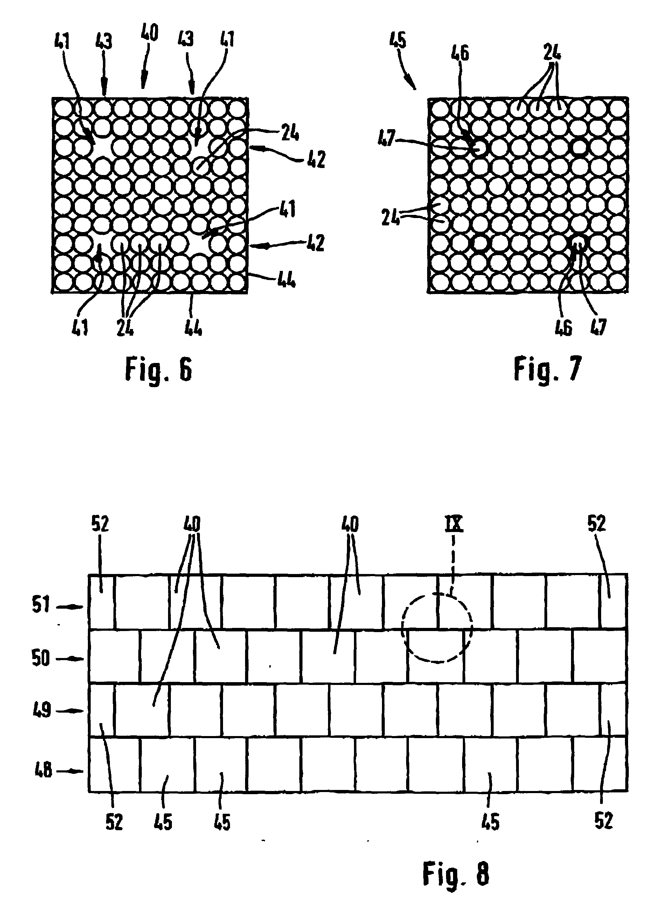

Um einen in sich möglichst stabilen Füllkörper aus den einzelnen Füllkörperblöcken 21, 22, 23 bzw. 36 zu erhalten, ist es zweckmäßig, diese lagenweise im Verbund aufeinander zu setzen. Hierzu dient ein Füllkörperblock 40, wie er in Fig. 6 näher gezeigt ist. Dieser Füllkörperblock 40 weist vier durchgehende Ausnehmungen 41 auf. Die Ausnehmungen 41 sind dabei so angeordnet, daß innerhalb einer Reihe 42 bzw. einer Spalte 43 zwei Ausnehmungen 41 angeordnet sind. Der Abstand zwischen zwei Ausnehmungen 41 einer Reihe 42 bzw. einer Spalte 43 ist dabei exakt doppelt so groß wie der Abstand einer Ausnehmung 41 zu einer äußeren Kante 44 des Füllkörperblocks 40. Im vorliegenden Fall sind zwischen zwei Ausnehmungen 41 vier Reihen bzw. Spalten von Rohren 24 angeordnet. Entsprechend sind zwischen den Ausnehmungen 41 und den Kanten 44 des Füllkörperblocks 40 zwei Reihen bzw. Spalten von Rohren 24 vorhanden.

In Fig. 7 ist ein dem Füllkörperblock 40 gemäß Fig. 6 im wesentlichen entsprechender Füllkörperblock 45 dargestellt. Dieser verfügt analog zu dem Füllkörperblock gemäß Fig. 2 jedoch nur über Ausnehmungen 46, welche sich nur über einen Teil der Höhe des Füllkörperblocks 45 erstrecken. Der Füllkörperblock 45 verfügt somit noch über Rohre 47, die entsprechend den Rohren 24 ausgebildet sind, jedoch eine geringere Längenabmessung aufweisen. Die Rohre 47 sind mit den Rohren 24 z.B. durch Verschweißen fest verbunden.

Ein Füllkörper, der aus einem Verbund von Füllkörperblöcken 40 und/oder 45 gebildet ist, ist in Fig. 8 näher gezeigt. Da die Füllkörperblöcke 45 nur über Ausnehmungen 46 verfügen, die sich über einen Teil der Höhe des Füllkörperblocks 45 erstrecken, dienen diese vorzugsweise als unterste Lage 48 des Füllkörpers. Die darüber liegenden Lagen 49, 50, 51 können aus Füllkörperblöcken 40 gebildet sein. Allerdings kann die oberste Lage 51 auch aus Füllkörperblöcken 45 gebildet sein, die mit der Oberseite nach unten gedreht wurden.

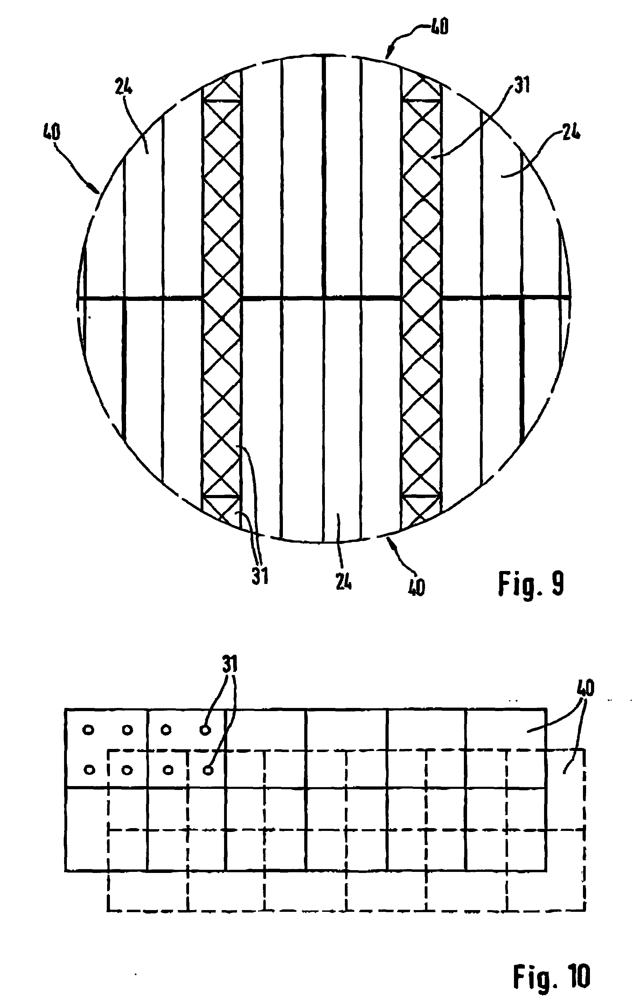

Wie sich aus Fig. 8 unmittelbar ergibt, sind die Füllkörperblöcke 40, 45 einer Lage 48..51 jeweils um die halbe Breite bzw. Länge eines Füllkörperblocks 40, 45 einer darüber bzw. darunter liegenden Lage 48..51 versetzt. Wie sich insbesondere aus Fig. 9 näher ergibt, sind die einzelnen Füllkörperblökke 40, 45 dabei so zueinander ausgerichtet, daß die Ausnehmungen 41, 46 zueinander fluchten. In diese Ausnehmungen 41, 46 sind die losen Rohre 31 eingesetzt. Die Füllkörperblöcke 40, 45 sind somit durch die losen Rohre 31 formschlüssig miteinander verbunden. Durch diese Verbundanordnung der Füllkörperblöcke 40, 45 ergibt sich ein stabiler Füllkörper.

Wie in Fig. 10 näher gezeigt ist, läßt sich mit den Füllkörperblöcken 40, 45 ein Verbund herstellen, bei dem die Füllkörperblöcke 40, 45 von Lage zu Lage in beiden horizontalen Richtungen zueinander versetzt sind. Ein Füllkörperblock 40, 45 überdeckt jeweils nur ¼ der Fläche eines darüber bzw. darunter liegenden Füllkörperblocks 40, 45 (in Draufsicht gesehen). Hierdurch ergibt sich ein in jede Richtung formstabiler Füllkörper.

Zur Bildung der oben beschriebenen "Verbund"-Füllkörper sind auch Füllkörperblöcke mit kleineren Abmessungen in Draufsicht gesehen erforderlich. Hierzu werden Halb-Füllkörperblöcke 52 (Fig. 8) und Viertel-Füllkörperblöcke (nicht dargestellt) hergestellt. Diese können durch Auftrennen von Füllkörperblökken 40, 45 zwischen den entsprechenden Reihen 42 bzw. Spalten 43 von Rohren 24 hergestellt werden.

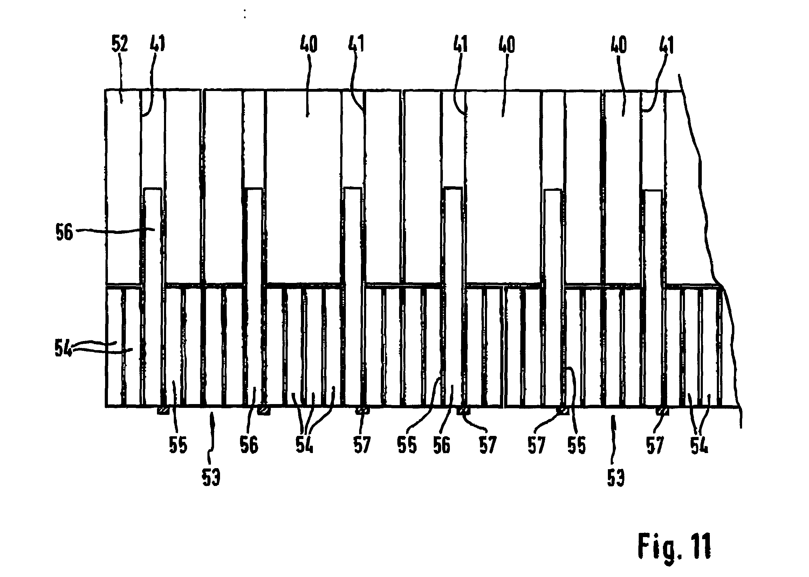

Eine Auflagerung für die erfindungsgemäßen Füllkörper ist in Fig. 11 näher gezeigt. Die Auflagerung muß so ausgebildet sein, daß die Durchströmung bzw. Umströmung des Füllkörpers durch die zu reinigende Flüssigkeit möglichst wenig behindert wird. Hierzu sind Auflagerblöcke 53 vorgesehen, die wiederum aus einzelnen Rohren 54 hergestellt sind. Die Rohre 54 sind dabei im Bereich ihrer Stirnenden miteinander verschweißt. Die Rohre 54 entsprechen hinsichtlich ihrer Querschnittsabmessungen exakt den Rohren 24 zur Bildung der Füllkörperblöcke 40, 45.

Die Auflagerblöcke 54 sind hinsichtlich ihrer Abmessungen in der horizontalen Ebene größer ausgebildet als die Füllkörperblöcke 40, 45. Während die Füllkörperblöcke 40, 45 aus 10 x 10 Rohren 24 hergestellt sind, werden die Auflagerblöcke 53 aus 20 x 20 Rohren 54 hergestellt. Die Auflagerblöcke 54 weisen ebenfalls Ausnehmungen 55 auf, die sich über einen Teil der Höhe des Auflagerblocks 53 oder, wie im gezeigten Ausführungsbeispiel, über die volle Höhe des Auflagerblocks 53 erstrecken. Die Auflagerblöcke 53 und die Füllkörperblöcke 40 sind dabei so zueinander ausgerichtet, daß die Ausnehmungen 41 der Füllkörperblöcke 40 zu den Ausnehmungen 55 der Auflagerblöcke 53 fluchten. In die Ausnehmungen 41 und 55 sind wiederum lose Rohre 56 eingesetzt zur Herstellung einer formschlüssigen Verbindung. Die losen Rohre sind länger ausgebildet als die Rohre 54 des Auflagerblocks 53. Im vorliegenden Fall erstrecken sich die losen Rohre 56 von der Unterkante der Auflagerblöcke 53 bis in die halbe Höhe der darüber liegenden Füllkörperblöcke 40.

Die Auflagerblöcke 53 liegen ihrerseits auf einem Rost von Stangen 57. Die Auflagerblöcke 53 sind dabei so ausgelegt, daß es ausreichend ist, nur jede dritte, vierte oder fünfte Reihe von Rohren 54 zu unterstützen. Im gezeigten Ausführungsbeispiel sind die Auflagerblöcke 53 so ausgelegt, daß sich die Stangen 57 jeweils im Bereich der losen Rohre 56 erstrecken. Die Stangen 57 sind dabei so angeordnet, daß sie sich mit einem Teil ihrer Breite im Bereich der losen Rohre 56 und dem anderen Teil ihrer Breite im Bereich der Rohre 54 erstrecken. Hierdurch sind gleichzeitig die losen Rohre 56 gegen Herausfallen gesichert, so daß sie nicht gesondert mit den Rohren 54 der Auflagerblöcke 53 verbunden werden müssen. Es ist aber auch möglich, die losen Rohre 56 mit den Rohren 54 der Auflagerblöcke 53 und/oder mit den Rohren 24 der Füllkörperblöcke 40 fest zu verbinden, z.B. durch Schweißen.

Da die Füllkörperblöcke 40 z.B. bei der Abwasserreinigung aufschwimmen können, ist auch eine Auftriebssicherung vorzusehen. Dies kann zum einen dadurch erfolgen, daß auf den Füllkörper eine Lage von Auflagerblöcken aufgelegt wird, die hinsichtlich ihres Gewichts so ausgelegt sind, daß die Füllkörperblöcke 40 nicht aufschwimmen können.

Eine andere Art der Auftriebssicherung ist in Fig. 12 näher gezeigt. Hier ist auf die oberste Lage von Füllkörperblöcken 40 ein Rost aus Stangen 58 aufgelegt. Die Stangen 58 sind durch einen Knebel 59 mit den Stangen 57 verbunden. Hinsichtlich seiner Länge ist der Knebel 59 geringfügig länger ausgebildet als die Gesamthöhe des Füllkörpers und der Schicht aus Auflagerblöcken 53. Dies ist erforderlich, um unterschiedliche Wärmedehnungen der unterschiedlichen Materialien auszugleichen. An seinem oberen Ende weist der Knebel 59 einen durch Umbiegen gebildeten Haken 60 auf. Dieser ist so ausgebildet, daß er mit seinem freien Ende die Stange 58 umfaßt und noch geringfügig in ein Rohr 24 des Füllkörperblocks 40 hineinragt. Ein durch den Füllkörper hindurchragender Schenkel 61 ist zumindest an seinem unteren Ende als Gewindestange ausgebildet. Hier wird durch eine Mutter 62 ein Hakenelement 63 gehalten, das die Stange 57 des unteren Rosts umfaßt. Die Mutter 62 sollte durch eine der üblichen Sicherungen gegen Verlieren gesichert werden.

Aus Stabilitätsgründen kann es auch zweckmäßig sein, eine obere Lage aus Auflagerblöcken 53 vorzusehen. Reicht das Gewicht derselben als Auftriebssicherung allein nicht aus, so können auch die obere und die untere Lage aus Auflagerblöcken 53 durch den Knebel 59 miteinander verbunden sein. Dieser Fall ist in Fig. 13 schematisch dargestellt. Dabei ist es ausreichend, wenn jede Stange 58 im Bereich eines Auflagerblocks 53 lediglich durch einen Knebel 59 gesichert ist.

Die Stangen 58 erstrecken sich in analoger Weise zu den Stangen 57 im Bereich der losen Rohre 56. Hierdurch sind die losen Rohre 56 wiederum gleichzeitig durch die Stangen 58 gegen Aufschwimmen gesichert. Die losen Rohre 56 können aber auch hier z.B. durch Verschweißen fest mit den Rohren 54 der Auflagerblocks 53 verbunden sein.

Eine alternative Ausführungsform für einen Knebel 59 ist in Fig. 14 und 15 näher gezeigt. Dieser ist hier als Gewindestange 64 ausgebildet und erstreckt sich im Bereich zwischen den Rohren 24 der Füllkörperblöcke 40 bzw. der Rohre 54 der Auflagerblöcke 53. An ihrem oberen Ende ist die Gewindestange 54 durch eine Bohrung (nicht dargestellt) durch die Stange 58 hindurchgeführt und durch eine Mutter 65 verschraubt. An ihrem unteren Ende ist die Gewindestange 64 zweckmäßigerweise ebenfalls durch eine Bohrung in der Stange 57 des unteren Rosts geführt und durch eine Mutter mit dieser verbunden. Die Muttern 65 sollten auch hier durch die üblichen Sicherungen gegen Verlieren gesichert sein. Die Länge der Gewindestange 54 ist wiederum so bemessen, daß unterschiedliche Wärmedehnungen ausgeglichen werden.

Die Füllkörperblöcke 21, 22, 23, 36, 40, 45 und Auflagerblöcke 53 werden aus den Rohren 24 bzw. 54 durch Verschweißen derselben an ihren Stirnseiten miteinander hergestellt. Die Ausnehmungen 25, 26, 41, 46, 55 werden anschließend durch Auftrennen der Verschweißungen und Entnahme der so gelösten Rohre gebildet. Diese Rohre können als lose Rohre 31, 38 verwendet werden.

In gleicher Weise können Füllkörper für andere Einsatzzwecke, insbesondere die Behandlung von Gasen und die Kühlung von Flüssigkeiten, ausgebildet sein.

## Patentansprüche

1. Füllkörper, insbesondere zur biologischen Abwasser-Reinigung, aus mindestens zwei lösbar miteinander verbundenen Füllkörperblöcken (21, 22, 23, 36), die mehrere fest miteinander verbundene Rohre (24, 29, 30) mit netzartig strukturierter Mantelfläche aufweisen, **dadurch gekennzeichnet, dass** die Füllkörperblöcke (21, 22, 23, 36) Ausnehmungen (25, 26) aufweisen, und dass mindestens ein Rohr (31, 37, 38, 39) eines oder jedes Füllkörperblocks (21, 22, 23, 36) einen Querschnitt aufweist, der dem Querschnitt der übrigen Rohre (24, 29, 30) und der Ausnehmungen (25, 26) entspricht, wobei dieses mindestens eine Rohr (31, 37, 38, 39) in entsprechenden Ausnehmungen (25, 26) angeordnet ist und sich über mehrere Füllkörperblöcke (21, 22, 23, 36) erstreckt.

2. Füllkörper nach Anspruch 1, **dadurch gekennzeichnet, dass** das oder jedes Rohr (31, 37, 38, 39) lose ausgebildet ist.

3. Füllkörper nach Anspruch 1 oder 2, **dadurch gekennzeichnet, dass** jeder Füllkörperblock (21, 22, 23, 36) mindestens zwei Ausnehmungen (25, 26) aufweist.

4. Füllkörper nach einem der Ansprüche 1 bis 3, **dadurch gekennzeichnet, dass** die Füllkörperblöcke (22, 36) über ihre Höhe durchgehende Ausnehmungen (25) aufweisen.

5. Füllkörper nach einem der Ansprüche 1 bis 4, **dadurch gekennzeichnet, dass** die Füllkörperblöcke (21, 23) Ausnehmungen (26) aufweisen, die sich über einen Teil der Höhe des Füllkörperblocks (21, 23) erstrecken.

6. Füllkörper nach einem der Ansprüche 1 bis 5, **dadurch gekennzeichnet, dass** in die Ausnehmungen (25, 26) lose Rohre (31, 37, 38, 39) unterschiedlicher Längenabmessungen hineinragen.

7. Füllkörper nach einem der Ansprüche 1 bis 6, **dadurch gekennzeichnet, dass** die in die Ausnehmungen (25, 26) hineinragenden losen Rohre (31, 37, 38ᵣ 39) mit den Füllkörperblöcken (21, 22, 23, 36) verbunden, insbesondere verschweißt, sind.

8. Füllkörper nach einem der Ansprüche 1 bis 7, **dadurch gekennzeichnet, dass** jeder Füllkörperblock (40, 45) in wenigstens zwei Reihen (42) und Spalten (43) von Rohren (24) wenigstens zwei Ausnehmungen (41, 46) aufweist, wobei der Abstand zwischen zwei Ausnehmungen (41, 46) genau doppelt so groß ist wie der Abstand der Ausnehmungen (41, 46) zu Kanten (44) des Füllkörperblocks (40, 45).

9. Füllkörper nach Anspruch 8, **dadurch gekennzeichnet, dass** jeder Füllkörperblock vier Ausnehmungen (41, 46) aufweist

10. Füllkörperblock nach Anspruch 8 oder 9, **dadurch gekennzeichnet, dass** die Füllkörperblöcke (40, 45) einer Lage (48, 49, 50, 51) um eine halbe Füllkörperbreite bzw. -länge versetzt zu den Füllkörperblöcken (40, 45) einer darüber undloder darunter liegenden Lage (48..51) angeordnet sind.

11. Füllkörper nach Anspruch 10, **dadurch gekennzeichnet, dass** die Füllkörperblöcke (40, 45) einer der Lagen (48..51) in zwei senkrecht zueinander stehenden horizontalen Richtungen versetzt zu den Füllkörperblöcken (40, 45) einer darüber und/oder darunter liegenden Lage (48..51) angeordnet sind.

12. Füllkörper nach einem der Ansprüche 1 bis 11, **dadurch gekennzeichnet, dass** die Füllkörperblöcke (21, 22, 23, 36, 40, 45) der untersten Lage auf einer unteren Lage aus Auflagerblöcken (53) ruhen, wobei die Auflagerblöcke (53) hinsichtlich ihrer Abmessungen in einer horizontalen Ebene größer ausgebildet sind als die Füllkörperblöcke (21, 22, 23, 36, 40, 45).

13. Füllkörper nach Anspruch 12, **dadurch gekennzeichnet, dass** die Auflagerblöcke (53) auf einem Rost von parallel zueinander angeordneten Stangen (57) ruhen, die sich jeweils im Bereich von losen Rohren (56) erstrecken.

14. Füllkörper nach einem der Ansprüche 1 bis 13, **dadurch gekennzeichnet, dass** die Füllkörperblöcke (21, 22, 23, 36, 40, 45) gegen Auftrieb gesichert sind.

15. Füllkörper nach Anspruch 14, **dadurch gekennzeichnet, dass** die Füllkörperblöcke (21, 22, 23, 36, 40, 45) durch einen oberen Rost von parallel zueinander sich erstreckenden Stangen (58) gesichert sind, wobei die Stangen (58) des oberen Rosts durch einen Knebel (59) mit den Stangen (57) des unteren Rosts verbunden sind.

16. Füllkörper nach Anspruch 15, **dadurch gekennzeichnet, dass** zur Auftriebssicherung eine obere Lage von Auflagerblöcken (53) vorgesehen ist, die durch ihr Eigengewicht ein Aufschwimmen der Füllkörperblöcke (21, 22, 23, 36, 40, 45) verhindern.

17. Füllkörper nach Anspruch 14, **dadurch gekennzeichnet, dass** eine obere Lage aus Auflagerblöcken (53) vorgesehen ist, die durch einen oberen Rost aus Stangen (58) gegen Aufschwimmen gesichert ist, wobei die Stangen (58) des oberen Rosts durch den Knebel (59) mit den Stangen (57) des unteren Rosts verbunden sind.

18. Verfahren zur Herstellung von Füllkörpem nach einem oder mehreren der Ansprüche 1 bis 17, wobei einzelne Füllkörperblöcke (21, 22, 23, 36, 40, 45) aus einzelnen Rohren (24, 29, 30, 47) hergestellt sind, indem die Rohre (24, 29, 30, 47) im Bereich ihrer Stimenden durch Verschweißen miteinander verbunden werden, **dadurch gekennzeichnet, dass** Ausnehmungen (25, 26, 41, 46) durch Ausstanzen loser Rohre (31, 37, 38, 39) in den Füllkörperblöcken (21, 22, 23, 36, 40, 45) hergestellt werden und die durch das Ausstanzen entstehenden losen Rohre (31, 37, 38, 39) in die Ausnehmungen (25, 26, 41, 46) so eingesetzt werden, dass die losen Rohren (31, 37, 38, 39) zur Verbindung mehrerer Füllkörperblöcke (21, 22, 23, 36, 40, 45) sich über mehrere Füllkörperblöcke (21, 22, 23, 36, 40, 45) erstrecken.

## Claims

1. Filler body, in particular for the biological purification of waste water, consisting of at least two filler-body blocks (21, 22, 23, 36) which are releaseably connected to one another and have a plurality of tubes (24, 29, 30) firmly connected to one another with an outer surface structured in a net-like manner, **characterized in that** the filler-body blocks (21, 22, 23, 36) have gaps (25, 26), and **in that** at least one tube (31, 37, 38, 39) of one, or of each, filler-body block (21, 22, 23, 36) has a cross section which corresponds to the cross section of the other tubes (24, 29, 30) and of the gaps (25, 26), this at least one tube (31, 37, 38, 39) being arranged in corresponding gaps (25, 26) and extending over a plurality of filler-body blocks (21, 22, 23, 36).

2. Filler body according to Claim 1, **characterized in that** the or each tube (31, 37, 38, 39) is designed to be loose.

3. Filler body according to Claim 1 or 2, **characterized in that** each filler-body block (21, 22, 23, 36) has at least two gaps (25, 26).

4. Filler body according to one of Claims 1 to 3, **characterized in that** the filler-body blocks (22, 36) have gaps (25) continuing over their height.

5. Filler body according to one of Claims 1 to 4, **characterized in that** the filler-body blocks (21, 23) have gaps (26) which extend over a part of the height of the filler-body block (21, 23).

6. Filler body-according to one of Claims 1 to 5, **characterized in that** loose tubes (31, 37, 38, 39) of different length dimensions project into the gaps (25, 26).

7. Filler body according to one of Claims 1 to 6, **characterized in that** the loose tubes (31, 37, 38, 39) projecting into the gaps (25, 26) are connected, in particular welded, to the filler-body blocks (21, 22, 23, 36).

8. Filler body according to one of Claims 1 to 7, **characterized in that** each filler-body block (40, 45) has at least two gaps (41, 46) in at least two rows (42) and columns (43) of tubes (24), the distance between two gaps (41, 46) being exactly twice the distance of the gaps (41, 46) from edges (44) of the filler-body block (40, 45).

9. Filler body according to Claim 8, **characterized in that** each filler-body block has four gaps (41, 46).

10. Filler body according to Claim 8 or 9, **characterized in that** the filler-body blocks (40, 45) of one layer (48, 49, 50, 51) are arranged offset by half a filler-body width or length relative to the filler-body blocks (40, 45) of a layer (48..51) located above and/or below it.

11. Filler body according to Claim 10, **characterized in that** the filler-body blocks (40, 45) of one of the layers (48..51) are arranged offset in two horizontal directions disposed perpendicular to one another relative to the filler-body blocks (40, 45) of a layer (48..51) located above and/or below it.

12. Filler body according to one of Claims 1 to 11, **characterized in that** the filler-body blocks (21, 22, 23, 36, 40, 45) of the lowest layer rest on a lower layer of bearing blocks (53), the said bearing blocks (53) being designed in terms of their dimensions in a horizontal plane to be larger than the filler-body blocks (21, 22, 23, 36, 40, 45).

13. Filler body according to Claim 12, **characterized in that** bearing blocks (53) rest on a grate of rods (57) which are arranged parallel to one another and each extend in the region of loose tubes (56).

14. Filler body according to one of Claims 1 to 13, **characterized in that** the filler-body blocks (21, 22, 23, 36, 40, 45) are secured against buoyancy.

15. Filler body according to Claim 14, **characterized in that** the filler-body blocks (21, 22, 23, 36, 40, 45) are secured by an upper grate of rods (58) extending parallel to one another, the said rods (58) of the upper grate being connected by a toggle (59) to the rods (57) of the lower grate.

16. Filler body according to Claim 15, **characterized in that** an upper layer of bearing blocks (53) is provided for the buoyancy safeguard, which bearing blocks, due to their own weight, prevent the filler-body blocks (21, 22, 23, 36, 40, 45) from floating up.

17. Filler body according to Claim 14, **characterized in that** an upper layer of bearing blocks (53) is provided, which is secured by an upper grate of rods (58) against floating up, the said rods (58) of the upper grate being connected by the toggle (59) to the rods (57) of the lower grate.

18. Method for the manufacture of filler bodies according to one or more of Claims 1 to 17, individual filler-body blocks (21, 22, 23, 36, 40, 45) being manufactured from individual tubes (24, 29, 30, 47) by the tubes (24, 29, 30, 47) being connected to one another by welding in the region of their end faces, **characterized in that** gaps (25, 26, 41, 46) are produced in the filler-body blocks (21, 22, 23, 36, 40, 45) by cutting out loose tubes (31, 37, 38, 39) and the loose tubes (31, 37, 38, 39) which are produced by cutting out are inserted into the gaps (25, 26, 41, 46) in such a way that the loose tubes (31, 37, 38, 39) extend over a plurality of filler-body blocks (21, 22, 23, 36, 40, 45) in order to connect a plurality of filler-body blocks (21, 22, 23, 36, 40, 45).

## Revendications

1. Elément de garnissage, en particulier pour l'épuration biologique des eaux usées, constitué d'au moins deux blocs d'élément de garnissage (21, 22, 23, 36) qui sont joints de manière séparable et présentent plusieurs tubes joints rigidement (24, 29, 30) qui ont une surface latérale structurée de manière réticulée, **caractérisé par le fait que** les blocs d'élément de garnissage (21, 22, 23, 36) présentent des évidements (25, 26), et qu'au moins un tube (31, 37, 38, 39) d'un ou de chaque bloc d'élément de garnissage (21, 22, 23, 36) présente une section qui correspond à la section des autres tubes (24, 29, 30) et des évidements (25, 26), ce ou ces tubes (31, 37, 38, 39) étant placé(s) dans des évidements correspondants (25, 26) et s'étendant sur plusieurs blocs d'élément de garnissage (21, 22, 23, 26).

2. Elément de garnissage selon la revendication 1, **caractérisé par le fait que** le ou chaque tube (31, 37, 38, 39) est lâche.

3. Elément de garnissage selon l'une des revendications 1 et 2, **caractérisé par le fait que** chaque bloc d'élément de garnissage (21, 22, 23, 36) présente au moins deux évidements (25, 26).

4. Elément de garnissage selon l'une des revendications 1 à 3, **caractérisé par le fait que** les blocs d'élément de garnissage (22, 36) présentent des évidements qui s'étendent sur leur hauteur.

5. Elément de garnissage selon l'une des revendications 1 à 4, **caractérisé par le fait que** les blocs d'élément de garnissage (21, 23) présentent des évidements (26) qui s'étendent sur une partie de la hauteur du bloc d'élément de garnissage (21,23).

6. Elément de garnissage selon l'une des revendications 1 à 5, **caractérisé par le fait que** dans les évidements (25, 26) entrent des tubes lâches (31, 37, 38, 39) de différentes longueurs.

7. Elément de garnissage selon l'une des revendications 1 à 6, **caractérisé par le fait que** les tubes lâches (31, 37, 38, 39) qui entrent dans les évidements (25, 26) sont joints, en particulier soudés, aux blocs d'élément de garnissage (21, 22, 23, 36).

8. Elément de garnissage selon l'une des revendications 1 à 7, **caractérisé par le fait que** chaque bloc d'élément de garnissage (40, 45) présente dans au moins deux rangées (42) et colonnes (43) de tubes (24) au moins deux évidements (41, 46), la distance entre deux évidements (41, 46) étant exactement le double de la distance des évidements (41, 46) aux côtés (44) du bloc d'élément de garnissage (40, 45).

9. Elément de garnissage selon la revendication 8, **caractérisé par le fait que** chaque bloc d'élément de garnissage présente quatre évidements (41, 46).

10. Elément de garnissage selon l'une des revendications 8 et 9, **caractérisé par le fait que** les blocs d'élément de garnissage (40, 45) d'une couche (48, 49, 50, 51) sont décalés d'une demi largeur ou demi-longueur d'élément de garnissage par rapport aux blocs d'élément de garnissage (40, 45) d'une couche (48, ..., 51) située au-dessus et/ou au-dessous.

11. Elément de garnissage selon la revendication 10, **caractérisé par le fait que** les blocs d'élément de garnissage (40, 45) d'une des couches (48, ..., 51) sont décalés dans deux directions horizontales perpendiculaires par rapport aux blocs d'élément de garnissage (40, 45) d'une couche (48, ..., 51) située au-dessus et/ou au-dessous.

12. Elément de garnissage selon l'une des revendications 1 à 11, **caractérisé par le fait que** les blocs d'élément de garnissage (21, 22, 23, 36, 40, 45) de la couche la plus basse reposent sur une couche inférieure de blocs d'appui (53), les blocs d'appui (53) ayant des dimensions dans un plan horizontal supérieures à celles des blocs d'élément de garnissage (21, 22, 23, 36, 40, 45).

13. Elément de garnissage selon la revendication 12, **caractérisé par le fait que** les blocs d'appui (53) reposent sur une grille de barres placées parallèlement les unes aux autres (57) qui s'étendent chacune dans la zone de tubes lâches (56).

14. Elément de garnissage selon l'une des revendications 1 à 13, **caractérisé par le fait que** les blocs d'élément de garnissage (21, 22, 23, 36, 40, 45) sont arrêtés contre la poussée d'Archimède.

15. Elément de garnissage selon la revendication 14, **caractérisé par le fait que** les blocs d'élément de garnissage (21, 22, 23, 36, 40, 45) sont arrêtés par une grille supérieure de barres s'étendant parallèlement les unes aux autres (58), les barres (58) de la grille supérieure étant reliées par un garrot (59) aux barres (57) de la grille inférieure.

16. Elément de garnissage selon la revendication 15, **caractérisé par le fait que** pour l'arrêt contre la poussée d'Archimède est prévue une couche supérieure de blocs d'appui (53) qui empêche par leur propre poids une remontée des blocs d'élément de garnissage (21,22,23, 36,40,45).

17. Elément de garnissage selon la revendication 14, **caractérisé par le fait qu'**il est prévu une couche supérieure de blocs d'appui (53) qui est arrêtée contre une remontée par une grille supérieure de barres (58), les barres (58) de la grille supérieure étant reliées par le garrot (59) aux barres (57) de la grille inférieure.

18. Procédé pour fabriquer des éléments de garnissage selon l'une des revendications 1 à 17, selon lequel des blocs d'élément de garnissage individuels (21,22,2,36,40,45) sont réalisés à partir de tubes individuels (24,29,30,47), les tubes (24,29,30,47) étant liés les uns aux autres par soudage à proximité de leurs extrémités, **caractérisé par le fait que**, des évidements (25,26,41,46) sont réalisés dans les blocs d'élément de garnissage (21,22,23,36,40,45) par poinçonnage de tubes lâches (31,37,38,39) et que les tubes poinçonnés (31,37,38,39) sont placés dans les évidements (25,26,41,46) de telle façon que les tubes lâches (31,37,38,39) s'étendent à travers plusieurs blocs d'élément de garnissage (21,22,23,36,40,45) pour les lier.
